# EUROPEAN PATENT APPLICATION

(11) **EP 4 573 986 A1**
(43) Date of publication of application: **25.06.2025**
(21) Application number: 23219200.5
(22) Date of filing: 21.12.2023
(51) Int. Cl.: A47J 31/44

(54) **KITCHEN MIXING DEVICE AND BEVERAGE MACHINE COMPRISING THE SAME**

(71) Applicant: Versuni Holding B.V., 5656 AE Eindhoven (NL)
(72) Inventor: VAN DER VEEN, Bram, 5656 AE Eindhoven (NL)
(74) Representative: Vollering, Stefanus Franciscus Maria

(57) **Abstract**

Provided is a liquid intake assembly (110) for supplying liquid to a mixing chamber (102) of a kitchen mixing device (100), such as a milk frother. The liquid intake assembly comprises an insert member (112) for arranging in a container (114), which container is suitable for containing liquid (103), e.g. milk. The liquid intake assembly further comprises a sleeve member (118) for arranging in the container and cooperating with the insert member. The insert member is configured to fit inside the sleeve member with the sleeve member extending around the insert member. At least one flow channel (120) is arranged to receive the liquid from the container. The at least one flow channel is defined between the insert member and an interior surface (122) of the sleeve member. The at least one flow channel may deliver the liquid to the mixing chamber (102). Further provided is a beverage machine comprising the liquid intake assembly and/or the kitchen mixing device.

## Description

### FIELD OF THE INVENTION

The invention relates to a kitchen mixing device, for example a kitchen mixing device in the form of a milk frother, and a beverage machine comprising such a kitchen mixing device.

### BACKGROUND OF THE INVENTION

Various kitchen mixing devices are known that operate by drawing a liquid, e.g. milk, into a mixing chamber. The liquid drawn into the mixing chamber may then be mixed with one or more other fluids, e.g. air and/or steam.

This principle tends to be employed for instance in milk frothers. Incorporating milk frothing functionality in beverage machines, e.g. coffee machines, is a growing and increasingly affordable trend.

For instance, from WO2019129515A1 a milk frother is known, for use with a coffee machine. The milk frother comprises a carafe for receiving milk and a frame that can be mounted on a steam outlet of the coffee machine for receiving steam. In use, the carafe is clipped onto the frame. A milk inlet tube is formed between an outer surface of the carafe and an inner surface of the frame. More specifically, the outer surface of the carafe includes a groove and the frame includes a seal that in assembled condition overlaps the groove to form aforementioned milk inlet tube. In use, steam provided by the coffee machine is jetted through a Venturi restriction. This provides a local pressure drop just downstream of the Venturi restriction. This pressure drop is used to draw in milk from the carafe via the milk inlet tube. The milk is then mixed with steam and optionally air to produce milk froth.

An advantage of this known milk frother is that the milk inlet tube is readily accessible for easy cleaning, by simply taking the carafe and frame apart. A drawback, however, is that the carafe needs to have an outlet opening near its bottom to allow milk to flow into the milk inlet tube. Due to this opening, to prevent milk from spilling, the carafe must be emptied before taking the carafe and fame apart. Further, sufficient closing force is needed between the carafe and frame to prevent milk from leaking away, in particular in a direction perpendicular to the main flow direction of the milk inlet tube. The high closing force imposes certain challenges on the design of the carafe and frame, e.g. in relation to their stiffness and robustness.

### SUMMARY OF THE INVENTION

The invention is defined by the claims.

According to examples in accordance with an aspect of the invention, there is provided a kitchen mixing device comprising: a mixing chamber; and a liquid intake assembly comprising: an insert member for arranging in a container, which container is suitable for containing liquid; and a sleeve member for arranging in the container and cooperating with the insert member, the insert member being configured to fit inside the sleeve member with the sleeve member extending around the insert member, wherein at least one flow channel, arranged to receive the liquid from the container, is defined between the insert member and an interior surface of the sleeve member, the sleeve member delimiting at least one port for fluidly coupling the at least one flow channel to the mixing chamber.

The liquid and one or more other fluids, e.g. air and/or steam, may be mixed with each other in the mixing chamber.

When the liquid comprises milk, mixing with one or more fluids, e.g. air and/or steam, in the mixing chamber may cause frothing of the milk.

In some embodiments, the kitchen mixing device comprises, e.g. is in the form of, a milk frother.

The present disclosure primarily concerns the liquid intake assembly that provides one or more flow channels along which the liquid is deliverable into the mixing chamber. By being defined between an exterior surface of the insert member and the interior surface of the sleeve member, the flow channel(s) of the liquid intake assembly may be provided in a relatively mechanically robust manner, for example relative to alternative solutions that rely on planar surfaces, in which groove(s) is or are defined, cooperating with each other to enable the groove(s) to form closed flow channel(s).

In this respect, the surfaces of the insert member and the sleeve member that delimit the flow channel(s) may be non-planar, for instance due to being curved in two or three dimensions and/or being angled. This may contribute to the stiffness and robustness of the insert member-sleeve member configuration.

It is also noted that the insert member-sleeve member configuration may be more straightforward and cost-effective to implement than the above-mentioned alternative solutions, since the latter may require elaborate clamping and sealing in order for the planar surfaces to held together in a way that retains liquid in the flow channel(s).

Moreover, due to the flow channel(s) defined between the insert member and the sleeve member being arranged to receive the liquid from the container, the container can contain the liquid irrespective of whether or not the insert member and/or the sleeve member is or are arranged in the container.

For example, the container need not itself have any grooves or apertures for transporting the liquid to the mixing chamber, which may reduce the risk of liquid leakage or spillage from the container.

This may mean that the container can be filled with liquid, e.g. milk, and used to store the liquid, e.g. in a refrigerator, when the liquid intake assembly is not being used.

It is noted that the port(s), e.g. opening(s), that allow the liquid to pass from the flow channel(s) into the mixing chamber may be included in a liquid transport restriction, e.g. a milk transport restriction, that provides a resistance to liquid flow into the mixing chamber, and thus controls flow of liquid into the mixing chamber.

The distance between the insert member and the sleeve member can be included in the flow restriction, since this distance partly defines a cross-sectional flow-through area of the flow channel(s).

Preferably, the overall liquid transport restriction is relatively low, but there is a small area that has a controlled geometry to create a controlled resistance and thereby a controlled flow of liquid, e.g. milk.

The kitchen mixing device may comprise a fluid inlet, a fluid outlet, and a flow restriction arranged so that flow of fluid, e.g. steam, between the fluid inlet and the fluid outlet provides an under-pressure for drawing the liquid from the container into the mixing chamber via the flow channel(s) and the port(s).

In such embodiments, the kitchen mixing device may be regarded as including a Venturi pump configured to transport the liquid into the mixing chamber.

Such a Venturi pump may be particularly advantageous in respect of embodiments in which the kitchen mixing device comprises, e.g. is, a milk frother.

In some embodiments, the kitchen mixing device comprises a steam supply for supplying a flow of steam to the mixing chamber, e.g. for mixing with the liquid received from the container and/or for providing the under-pressure for drawing the liquid into the mixing chamber.

In more general terms, the kitchen mixing device may include a fluid transport system for transporting the liquid from the container into the mixing chamber via the flow channel(s) and the port(s) of the liquid intake assembly.

In some embodiments, the insert member is at least partially releasable from inside the sleeve member. This may assist with cleaning of the liquid intake assembly after use, since at least partial release of the insert member from inside the sleeve member may facilitate access to the interior surface of the sleeve member and the exterior surface of the insert member.

In some embodiments, the insert member is detachable in its entirety from the sleeve member. This may further facilitate cleaning of the liquid intake assembly after use.

Alternatively or additionally, the interior surface may delimit a widening, e.g. flared, cavity whose width is greater with increasing distance away from the port(s) and/or with decreasing distance towards a base opening of the sleeve member that receives the insert member.

Such a widening, e.g. flared, cavity may facilitate cleaning of the sleeve member, e.g. when the insert member is at least partially released from inside the sleeve member.

The cavity delimited by the sleeve member's interior surface may have any suitable shape. In some embodiments, the widening cavity has a conical, e.g. frustoconical, pyramidal, e.g. truncated pyramidal, or semi-spherical shape.

In some embodiments, the insert member comprises a tapering shape that narrows as the cavity's width decreases. For example, the tapering shape may comprise a conical, e.g. frustoconical, or pyramidal, e.g. truncated pyramidal, shape. Such a tapering shape may assist to form a suitably narrow gap between the interior surface of the sleeve member and the exterior surface of the insert member.

In some embodiments, fit of the insert member inside the sleeve member is adjustable to control flow or flow rate through the at least one flow channel. For some applications, it may be desired to adjust a cross-sectional flow-through area of the flow channel(s). For example, in embodiments in which steam is combined with milk in the mixing chamber, the flow rate of the liquid may be increased when cold milk froth is desired instead of hot milk froth.

In some embodiments, at least one of the insert member and the sleeve member comprises a non-stick and/or sealing material for contacting the liquid. The non-stick and/or sealing material may assist to enhance cleanability by having low adherence to the liquid or components, such as fats and/or proteins, included in the liquid. To this end, the non-stick and/or sealing material may have a surface energy lower than 36 dynes/cm.

Alternatively or additionally, the non-stick and/or sealing material may assist to avoid the liquid received in the flow channel(s) leaking therefrom. Even if liquid leaks from the flow channel(s), it will remain confined within the sleeve member, between the insert member and the surrounding sleeve member. In other words, the liquid cannot leak away in an uncontrolled manner. It can only leave the liquid intake assembly via the base opening of the sleeve member (where it will land up in the container) or via the at least one port (where it will land up in the mixing chamber).

The non-stick and/or sealing material may be of any suitable type. In some embodiments, the non-stick and/or sealing material comprises silicone.

In some embodiments, the insert member comprises a core body, with a layer of non-stick and/or sealing material being arranged on the core body. Alternatively or additionally, the sleeve member may comprise a main body, with a layer of non-stick and/or sealing material being arranged on the main body.

Such a layer of non-stick and/or sealing material, e.g. silicone, can be arranged on the respective body in any suitable manner. In some embodiments, the layer of the non-stick and/or sealing material is molded onto the respective body, for example in a two-step, e.g. 2K, molding process that initially comprises molding the respective body, e.g. from a suitable thermoplastic material.

In some embodiments, one or more grooves for carrying the liquid is or are defined in the exterior surface of the insert member and/or in the interior surface of the sleeve member. Such groove(s) may mean that the insert member can be fitted more tightly into the sleeve member whilst still providing the flow channel(s) and/or may assist to control flow of the liquid through the flow channel(s).

In other embodiments, no such grooves may be provided. For example, a single annular flow channel may be defined around the insert member and extend from the base opening of the sleeve member to the port.

In some embodiments, an attachment system is configured to secure the insert member and the sleeve member to each other, with the insert member being inserted into the sleeve member to define the at least one flow channel. In some embodiments, the attachment system comprises a rotatable connection, such as a bayonet-type connection or a threaded connection. Other types of attachment system can also be contemplated, such as clips, snap fingers, and so on. The latter types of attachment system may for instance be advantageous if the sleeve member, the insert member and/or the container do not have a rotationally symmetrical shape and/or if the sleeve member and insert member are not located in the center of the container.

In some embodiments, a lid is provided for closing the container. The lid may assist to minimize the risk of contamination of the liquid contained in the container.

In such embodiments, the sleeve member may be mounted or mountable to the lid to enable the sleeve member to receive the insert member and define the at least one flow channel when the container is closed by the lid.

The attachment system may, for example, be configured to secure the lid onto the container with the sleeve member mounted to the lid and receiving the insert member to define the flow channel.

Thus, the attachment system may advantageously fulfil a dual purpose: securing the insert member and the sleeve member to each other and securing closure of the container.

Alternatively or additionally, the mixing chamber and the sleeve member may be together included in a mixing chamber-sleeve member assembly. The mixing chamber-sleeve member assembly may include a housing that delimits the mixing chamber, with the sleeve member being mounted or mountable to the housing.

In some embodiments, the kitchen mixing device comprises an air inlet through which air is receivable into the mixing chamber. In such embodiments, air may be combined with the liquid, e.g. as well as steam being combined with the liquid, in the mixing chamber.

In some embodiments, an adjustment mechanism is provided for controlling an amount of air deliverable into the mixing chamber via the air inlet. In such embodiments, the adjustment mechanism may assist to control characteristics of froth or foam produced from the liquid delivered into the mixing chamber.

According to another aspect there is provided a beverage machine comprising the kitchen mixing device according to any of the embodiments described herein.

Such a beverage machine may, for example, include, in addition to the kitchen mixing device, a preparation chamber in which water, e.g. hot water, may be combined with a raw material, e.g. food ingredients, such as ground coffee.

In some embodiments, the beverage machine comprises coffee brewing apparatus. In such embodiments, frothed liquid, e.g. milk, prepared by the kitchen mixing device may be combined with coffee brewed by the coffee brewing apparatus in a coffee beverage produced by the beverage machine.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
FIG. 1 schematically depicts a kitchen mixing device according to a first example;
FIG. 2A provides a schematic cross-sectional view of a kitchen mixing device according to a second example;
FIG. 2B provides a schematic exploded view of the kitchen mixing device shown in FIG. 2A;
FIG. 3 provides an exploded view of a kitchen mixing device according to a third example;
FIGs. 4A and 4B provide views of a steam wand assembly that can be used with, for example included in, the kitchen mixing device according to embodiments described herein;
FIG. 5 provides a perspective view of a kitchen mixing device according to a fourth example; and
FIG. 6 provides an exploded view of an adjustment mechanism for controlling an amount of air deliverable into a mixing chamber of a kitchen mixing device according to embodiments described herein.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a liquid intake assembly for supplying liquid to a mixing chamber of a kitchen mixing device, such as a milk frother. The liquid intake assembly comprises an insert member for arranging in a container, which container is suitable for containing liquid, e.g. milk. The liquid intake assembly further comprises a sleeve member for arranging in the container and cooperating with the insert member. The insert member is configured to fit inside the sleeve member with the sleeve member extending around the insert member. At least one flow channel is arranged to receive the liquid from the container. The at least one flow channel is defined between the insert member and an interior surface of the sleeve member. The at least one flow channel may deliver the liquid to the mixing chamber. Further provided is a beverage machine comprising the liquid intake assembly and/or the kitchen mixing device.

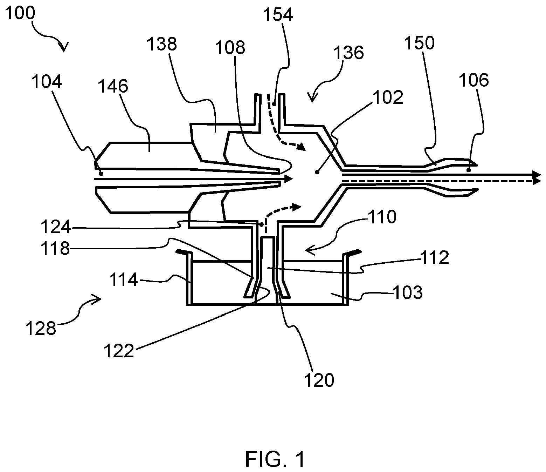

FIG. 1 schematically depicts a kitchen mixing device 100 according to an example. The kitchen mixing device 100 has a mixing chamber 102 in which a liquid 103 is receivable. The liquid 103 and one or more other fluids, e.g. air and/or steam, may be mixed with each other in the mixing chamber 102.

When the liquid 103 comprises, e.g. is, milk, mixing with one or more fluids, e.g. air and/or steam, in the mixing chamber 102 may cause frothing of the milk.

In some embodiments, the kitchen mixing device 100 comprises, e.g. is in the form of, a milk frother.

Alternatively or additionally, the kitchen mixing device 100 may be included in a beverage machine, e.g. a coffee machine.

Such a beverage machine may, for example, include, in addition to the kitchen mixing device 100, a preparation chamber in which water, e.g. hot water, may be combined with a raw material, such as ground coffee.

A non-limiting example of such a beverage machine is a semi or fully automatic coffee machine comprising a coffee grinding stage for grinding coffee, a brew chamber for receiving ground coffee from the coffee grinding stage, and a hot water supply system for delivering hot water to the brew chamber. The brew chamber may be an internal brew chamber that after a brew cycle is automatically emptied within the machine (in case of a fully automatic coffee machine) or a portafilter that after a brew cycle needs to be manually removed from the machine, emptied, and then reinstalled (in case of a semi automatic coffee machine).

In such an example, liquid, e.g. milk, frothed by the kitchen mixing device 100 may be manually or automatically dispensed to provide a beverage comprising coffee brewed in the brew chamber and liquid frothed by the kitchen mixing device 100.

In other embodiments, the kitchen mixing device 100 is a standalone device, e.g. a standalone milk frother.

In some embodiments, a steam supply is included in the kitchen mixing device 100 or in a beverage machine in which the kitchen mixing device 100 is included. Such a steam supply, e.g. comprising a steam generator for vaporizing water supplied thereto, may supply a flow of steam.

In some embodiments, such as shown in FIG. 1, this flow of steam is supplied to the mixing chamber 102, and the steam and the liquid 103 are mixed with each other in the mixing chamber 102. Alternatively or additionally, the kitchen mixing device 100 may be configured to generate, using the flow of steam, an under-pressure for drawing (at least) the liquid 103 into the mixing chamber 102.

In more general terms, the kitchen mixing device 100 may comprise a fluid inlet 104, a fluid outlet 106, and a flow restriction 108 arranged so that flow of fluid, e.g. steam, between the fluid inlet 104 and the fluid outlet 106 provides an under-pressure for drawing the liquid 103 into the mixing chamber 102.

Thus, the kitchen mixing device 100 may be regarded as including a Venturi pump configured to transport the liquid 103 into the mixing chamber 102.

Such a Venturi pump may be particularly advantageous in respect of embodiments in which the kitchen mixing device 100 comprises, e.g. is, a milk frother.

This is because frothed milk obtainable via such a Venturi pump may have relatively small bubbles and can be relatively easily poured. This may be referred to as "barista foam", and may be especially desirable for certain types of beverage, such as lattes and hot chocolate.

Exploratory testing using the kitchen mixing device 100 according to the present disclosure has indicated that steam supply for Venturi pump operation may be provided via a beverage machine's, e.g. a coffee machine's hot water supply system.

The present disclosure should not, however, be understood as being limited to such a Venturi pump transporting the liquid 103 into the mixing chamber 102. Any suitable fluid transport system, e.g. pump assembly, may be employed for this purpose.

In this regard, the present disclosure primarily concerns a liquid intake assembly 110 that provides one or more flow channels 120 along which the liquid 103 is deliverable into the mixing chamber 102. To this end, the liquid intake assembly 110 comprises an insert member 112 for arranging in a container 114, which container 114 is suitable for containing, e.g. storing, the liquid 103.

The insert member 112 can be arranged in the container 114 in any suitable manner. In some embodiments, such as shown in FIG. 1, the insert member 112 is mounted in the container 114 such that the insert member 112 upstands from a base of the container 114.

The liquid intake assembly 110 further comprises a sleeve member 118 for arranging in the container 114 and cooperating with the insert member 112. This cooperation between the sleeve member 118 and the insert member 112 comprises fitting of the insert member 112 inside the sleeve member 118, with the sleeve member 118 extending around the insert member 112. At least one flow channel 120 is defined between the insert member 112 and an interior surface 122 of the sleeve member 118.

The liquid 103 in the container 114 can be received in the flow channel(s) 120 and delivered from the flow channel(s) 120 into the mixing chamber 102.

As shown in FIG. 1, the sleeve member 118 delimits at least one port 124 for fluidly coupling the flow channel(s) 120 to the mixing chamber 102. In at least some embodiments, the port(s) 124 is or are arranged proximal to a top of the sleeve member 118 while a base opening of the sleeve member 118 that receives the insert member 112 is at a bottom of the sleeve member 118.

The flow channel(s) 120 defined between the insert member's 112 exterior surface and the sleeve member's 118 interior surface 122 provide flow path(s) along which the liquid 103 is deliverable from the container 114 into the mixing chamber 102.

Defining the flow channel(s) 120 in this way may have various benefits. In particular, the insert member 112-sleeve member 118 configuration may provide a relatively mechanically robust way of defining the flow channel(s) 120, for example relative to alternative solutions that rely on planar surfaces, to define a flow channel(s) therebetween.

In this respect, the surfaces of the insert member 112 and the sleeve member 118 that delimit the flow channel(s) 120 may be non-planar, for instance due to being curved in two or three dimensions and/or being angled. This may contribute to the stiffness and robustness of the insert member 112-sleeve member 118 configuration.

It is also noted that the insert member 112-sleeve member 118 configuration may be more straightforward and cost-effective to implement than the above-mentioned alternative solutions, since the latter may require elaborate clamping and sealing in order for the planar surfaces to held together in a way that retains liquid in the flow channel(s).

Moreover, due to the flow channel(s) 120 defined between the insert member 112 and the sleeve member 118 being arranged to receive the liquid 103 from the container 114, the container 114 can contain the liquid 103 irrespective of whether or not the insert member 112 and/or the sleeve member 118 is or are arranged in the container 114.

For example, the container 114 need not itself have any aperture(s) for transporting the liquid 103 to the mixing chamber 102, which may reduce the risk of liquid leakage from the container 114. This may mean that the container 114 can be filled with liquid 103, e.g. milk, and used to store the liquid 103, e.g. in a refrigerator, when the liquid intake assembly 110 is not being used.

The sleeve member 118 preferably cooperates with the insert member 112 so that the entrance to the flow channel(s) 120 is proximal to the base of the container 114, e.g. from which the insert member 112 upstands.

A non-limiting example of this is schematically shown in FIG. 1.

By ensuring that the entrance to the flow channel(s) 120 is as close as possible to the base of the container 114, more of the liquid 103 contained in the container 114 may be permitted to enter flow channel(s) 120 and thus be delivered to the mixing chamber 102.

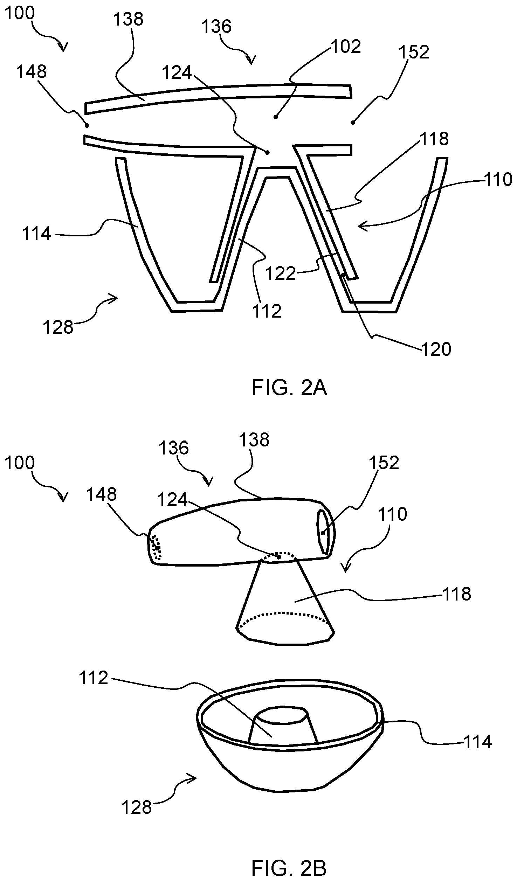

In some embodiments, such as shown in FIGs. 2A and 2B, the insert member 112 is at least partially releasable from inside the sleeve member 118. This may assist with cleaning of the liquid intake assembly 110 after use, since at least partial release of the insert member 112 from inside the sleeve member 118 may facilitate access to the interior surface 122 of the sleeve member 118 and the exterior surface of the insert member 112.

In some embodiments, and as best shown in FIG. 2B, the insert member 112 is detachable in its entirety from the sleeve member 118. This may further facilitate cleaning of the liquid intake assembly 110 after use.

Alternatively or additionally, the interior surface 122 may delimit a widening, e.g. flared, cavity whose width is greater with increasing distance away from the port(s) 124 and/or with decreasing distance towards the base opening of the sleeve member 118.

Such a widening, e.g. flared, cavity may facilitate cleaning of the sleeve member 118, e.g. when the insert member 112 is at least partially released from inside the sleeve member 118.

The cavity delimited by the sleeve member's 118 interior surface 122 may have any suitable shape. In some embodiments, the widening cavity has a conical, e.g. frustoconical, pyramidal, e.g. truncated pyramidal, or semi-spherical shape. In the non-limiting example schematically depicted in FIGs. 2A and 2B, the widening cavity has a frustoconical shape.

In other embodiments, the cavity does not widen with increasing distance away from the port(s) 124 or with decreasing distance towards the base opening of the sleeve member 118. For example, the cavity may have a cylindrical shape.

In such embodiments, accessibility of the cavity for cleaning may be facilitated by the base opening, in other words access opening, of the sleeve member 118 being sufficiently large.

It is noted that to obtain suitably narrow flow channel(s) 120 when the cavity delimited by the sleeve member's 118 interior surface 122 is relatively wide, the dimensions of the insert member 112 may be correspondingly scaled up.

In this manner, a suitably narrow gap may be formed between the interior surface 122 of the sleeve member 118 and the exterior surface of the insert member 112.

In some embodiments, such as shown in FIGs. 1, 2A and 2B, the insert member 112 comprises a tapering shape that narrows as the cavity's width decreases. For example, the tapering shape comprise a conical, e.g. frustoconical, or pyramidal, e.g. truncated pyramidal, shape. Such a tapering shape may assist to form a suitably narrow gap between the interior surface 122 of the sleeve member 118 and the exterior surface of the insert member 112. In the non-limiting example schematically depicted in FIGs. 2A and 2B, the insert member 112 has a frustoconical shape.

Alternatively or additionally, fit of the insert member 112 inside the sleeve member 118 may be adjustable to control flow through the at least one flow channel 120. For some applications, it may be desired to adjust a cross-sectional flow-through area of the flow channel(s) 120. For example, in embodiments in which steam is combined with milk in the mixing chamber 102, the flow rate of the liquid 103 may be increased when colder milk froth is desired instead of hot milk froth.

Adjustable fit of the insert member 112 inside the sleeve member 118 may be implemented in any suitable manner. In some embodiments, the insert member 112 may be adjustably positioned inside the sleeve member 118 so that the insert member 112 is insertable into the sleeve member 118 to different depths that each correspond to a different cross-sectional flow-through area of the flow channel(s) 120.

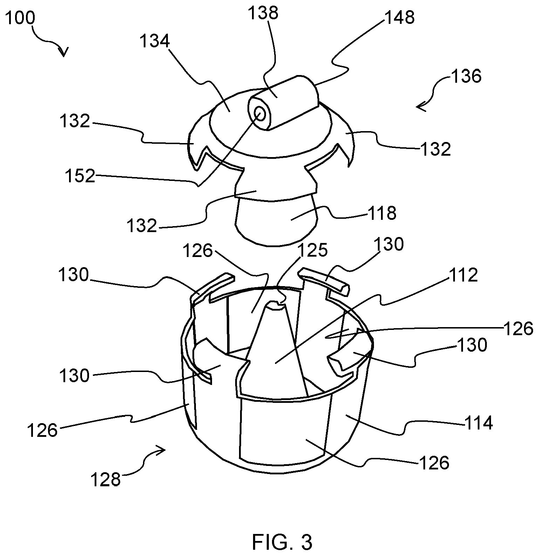

In some embodiments, such as shown in FIG. 3, one or more grooves 125 for carrying the liquid 103 is or are defined in the exterior surface of the insert member 112 and/or in the interior surface 122 of the sleeve member 118. Such groove(s) 125 may mean that the insert member 112 can be fitted more tightly into the sleeve member 118 and/or may assist to control flow of the liquid 103 through the flow channel(s) 120.

In other embodiments, no such grooves may be provided. For example, a single annular flow channel may be defined around the insert member 112 and extend from the base opening of the sleeve member 118 to the port(s) 124.

In some embodiments, at least one of the insert member 112 and the sleeve member 118 comprises a non-stick and/or sealing material for contacting the liquid 103. Accordingly, the non-stick and/or sealing material may provide (at least) the interior surface 122 of the sleeve member 118 and/or may provide (at least) the exterior surface of the insert member 112. The non-stick and/or sealing material may assist to enhance cleanability by having low adherence to the liquid 103 or components, such as fats and/or proteins, included in the liquid. To this end, the non-stick and/or sealing material may have a surface energy less than 36 dynes/cm.

Alternatively or additionally, the non-stick and/or sealing material may assist to avoid the liquid 103 received in the flow channel(s) 120 leaking therefrom.

The non-stick and/or sealing material may be of any suitable type. In some embodiments, the non-stick and/or sealing material comprises silicone.

It is noted that silicone may have a surface energy that is less than 30, e.g. less than 25, dynes/cm.

In some embodiments, the insert member 112 comprises a core body, with a layer of non-stick and/or sealing material being arranged on the core body. Alternatively or additionally, the sleeve member 118 may comprise a main body, with a layer of non-stick and/or sealing material being arranged on the main body.

In embodiments in which groove(s) 125 is or are defined in the exterior surface of the insert member 112 and/or in the interior surface 122 of the sleeve member 118, such groove(s) 125 may be defined in the non-stick and/or sealing material layer, e.g. silicone layer.

In a non-limiting example, the silicone layer may have an indentation 125 that creates a path, in other words a flow channel 120, for drawing in liquid 103, e.g. milk, from the container 114.

Such a path may be closed by pressing the insert member 112, e.g. cone, arranged in the container 114 into the sleeve member 118, e.g. cone-shaped sleeve member 118, and securing them in place against each other.

Such a layer of non-stick and/or sealing material, e.g. silicone, can be arranged on the respective body in any suitable manner. In some embodiments, the layer of the non-stick and/or sealing material is molded onto the respective body, for example in a two-step, e.g. 2K, molding process that initially comprises molding the respective body, e.g. from a suitable thermoplastic material.

More generally, the insert member 112 and the sleeve member 118 can be formed from any suitable material. In some embodiments, one or both of the insert member 112 and the sleeve member 118 is or are formed from a polymeric material, e.g. a thermoplastic, such as polyethylene or polypropylene, and/or an elastomeric material, e.g. silicone.

It is also noted that the container 114 may be included, together with the mixing chamber 102 and the liquid intake assembly 110, in the kitchen mixing device 100.

Thus, the user may be conveniently supplied with each of these components at the same time. In other embodiments, the container 114 is not included in the kitchen mixing device 100, but rather the user may utilize the liquid intake assembly 110 by arranging the insert member 112 and the sleeve member 118 in a container 114 that has been sourced separately by the user. This possibility reflects the fact that the design of the liquid intake assembly 110 need not impose any particular design requirement on the container 114.

The container 114 may have any suitable shape and can be formed from any suitable material. In some embodiments, and as best shown in FIGs. 2A, 2B and 3, the container 114 has a bowl shape or a jar shape.

Alternatively or additionally, the container 114 may be formed from a polymeric material, e.g. a thermoplastic, such as polyethylene or polypropylene, and/or an elastomeric material, e.g. silicone.

In some embodiments, the container 114 comprises a non-stick and/or sealing material, e.g. of the type described above, such as silicone. This material may be provided as a layer applied onto a first material constituting a main structure of the container 114.

In some embodiments, the layer of the non-stick and/or sealing material is molded onto the main structure of the container 114, for example in a two-step, e.g. 2K, molding process that initially comprises molding the main structure, e.g. from a suitable thermoplastic material.

In some embodiments, such as shown in FIG. 3, the container 114 comprises one or more viewing windows 126, e.g. transparent viewing windows 126, that allow(s) the user to visually discern the liquid 103 received in the container 114.

Thus, the user may utilize the viewing windows 126 as a guide for indicating when more liquid 103 should be added into the container 114.

In some embodiments, such as shown in FIGs. 1 to 3, the container 114 and the insert member 112 are included together in a container-insert member assembly 128 that includes the container 114 and the insert member 112 mounted or mountable in the container 114.

In such embodiments, the container-insert member assembly 128 may include the insert member 112 and the container 114 integrated with each other as a single piece. Non-limiting examples of this are shown in FIGs. 2A, 2B and 3.

Alternatively, the container-insert member assembly 128 may include the insert member 112 detachably mounted to the container 114, e.g. to the base of the container 114.

In such embodiments, detachment of the insert member 112 from the container 114 may facilitate cleaning of the container 114 and the insert member 112 after use.

In some embodiments, such as shown in FIG. 3, an attachment system 130, 132 is configured to secure the insert member 112 and the sleeve member 118 to each other, with the insert member 112 being inserted into the sleeve member 118 to define the at least one flow channel 120.

The attachment system 130, 132 can be arranged in any suitable manner and have any appropriate design. In some embodiments, the attachment system 130, 132 comprises a rotatable connection, such as a bayonet-type connection (as shown in FIG. 3) or a threaded connection.

The insert member 112 may be attached to one or more first coupling members 130, e.g. first bayonet connector members 130, and the sleeve member 118 may be attached to one or more second coupling members 132, e.g. second bayonet connector members 132.

Other types of attachment system 130, 132 can also be contemplated, such as clips, snap fingers, and so on.

In some embodiments, such as shown in FIG. 3, a lid 134 is provided for closing the container 114. The lid 134 may assist to minimize the risk of contamination of the liquid 103 contained in the container 114.

In such embodiments, the sleeve member 118 may be mounted or mountable to the lid 134 to enable the sleeve member 118 to receive the insert member 112 and define the at least one flow channel 120 when the container 114 is closed by the lid 134.

In such embodiments, the attachment system 130, 132 may, for example, be configured to secure the lid 134 onto the container 114 with the sleeve member 118 mounted to the lid 124 and receiving the insert member 112 to define the flow channel 120.

Thus, the attachment system 130, 132 may advantageously fulfil a dual purpose: securing the insert member 112 and the sleeve member 118 to each other and securing closure of the container 114.

In embodiments in which groove(s) 125 defined in the exterior surface of the insert member 112 and/or in the interior surface 122 of the sleeve member 118 mean that the insert member 112 is fitted tightly into the sleeve member 118, the attachment system 130, 132 may be configured to press the exterior surface of the insert member 112 onto the interior surface 122 of the sleeve member 118, e.g. with concomitant compression of the non-stick and/or sealing material(s), e.g. soft/silicone layer in-between.

Thus, the insert member 112 and the sleeve member 118 may be assisted by the attachment system 130, 132 to sealingly engage each other.

In some embodiments, such as shown in FIGs. 1 to 3, the liquid intake assembly 110 is centrally arranged in, in other words located in the center of, the container 114, e.g. with the insert member 112 being mounted or mountable to the center of the base of the container 114.

This spatial arrangement may be beneficial for various reasons, particularly in the context of the attachment system 130, 132 comprising the rotatable connection, e.g. with the container 114 and the liquid intake assembly 110 each having a rotationally symmetrical shape. It is nonetheless noted that off-center or asymmetric positioning of the liquid intake assembly 110 in the container 114 is also conceivable, e.g. depending on the design of the attachment system 130, 132.

It is noted that the port(s) 124 may not coincide with an upper edge of the container 114, in order to avoid the requirement for complex connections, seals etc. to prevent leakage.

Alternatively or additionally, and referring to FIGs. 1 to 3, the mixing chamber 102 and the sleeve member 118 may be together included in a mixing chamber-sleeve member assembly 136. The mixing chamber-sleeve member assembly 136 may include a housing 138 that delimits the mixing chamber 102, with the sleeve member 118 being mounted or mountable to the housing 138.

The housing 138 may be formed from any suitable material, such as a plastic material, e.g. a thermoplastic.

In such embodiments, the mixing chamber-sleeve member assembly 136 may include the housing 138 and the sleeve member 118 integrated with each other as a single piece. Non-limiting examples of this are shown in FIGs. 2A, 2B and 3.

Alternatively, the mixing chamber-sleeve member assembly 136 may include the sleeve member 118 detachably mounted to the housing 138, e.g. to an underside of the housing 138.

In such embodiments, detachment of the sleeve member 118 from the housing 138 may facilitate cleaning of the mixing chamber 102 and the sleeve member 118 after use.

In some embodiments, such as shown in FIG. 3, the mixing chamber-sleeve member assembly 136 may further include the lid 134, e.g. with the lid 134 sandwiched between the housing 138 and the sleeve member 118.

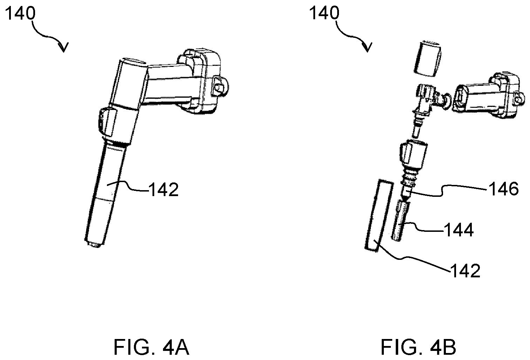

FIGs. 4A and 4B provide views of a steam wand assembly or panarello 140 that can be used with, for example included in, the kitchen mixing device 100 according to embodiments described herein. The steam wand assembly 140 comprises a main housing 142, 144, e.g. a main plastic housing, in which a steam nozzle 146 is arranged. The steam nozzle 146 may provide the flow restriction 108 described above in relation to FIG. 1.

The steam nozzle 146 can be formed from any suitable thermally robust material. In some embodiments, the steam nozzle 146 is formed from silicone.

The steam wand assembly 140 shown in FIGs. 4A and 4B can be used with, e.g. included in, the kitchen mixing device 100 by removal of the main housing 142, 144 and insertion of the steam nozzle 146 into an upstream aperture 148 defined in the housing 138 that delimits the mixing chamber 102.

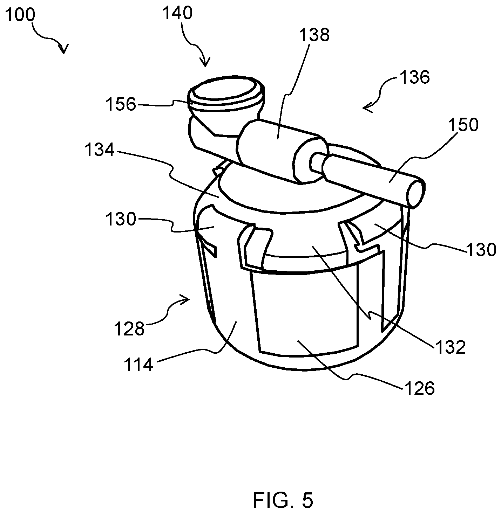

An outlet nozzle 150, for allowing the mixture comprising the liquid 103 to exit the mixing chamber 102, may extend from a downstream aperture 152 defined in the housing 138. Non-limiting examples of such an outlet nozzle 150 are schematically depicted in FIGs. 1 and 5.

More generally, and with continued reference to FIG. 1, an air inlet 154 may be provided through which air is receivable into the mixing chamber 102. In such embodiments, air may be combined with the liquid 103, e.g. as well as steam being combined with the liquid 103, in the mixing chamber 102.

In some embodiments, such as shown in FIG. 1, the air inlet 154 is delimited by the housing 138 in which the mixing chamber 102 is provided. Alternatively or additionally, the air inlet 154 may be included in the steam wand assembly 140, e.g. whose steam nozzle 146 is received in the upstream aperture 148 of the housing 138. A non-limiting example of the latter is shown in FIG. 5.

In embodiments in which the air inlet 154 is delimited by the housing 138, the air inlet 154 may be, for example, a fixed air inlet 154, e.g. a hole of fixed diameter. The latter may be regarded, for instance, as an air inlet of the type defined in a stainless steel sleeve of a steam wand assembly 140.

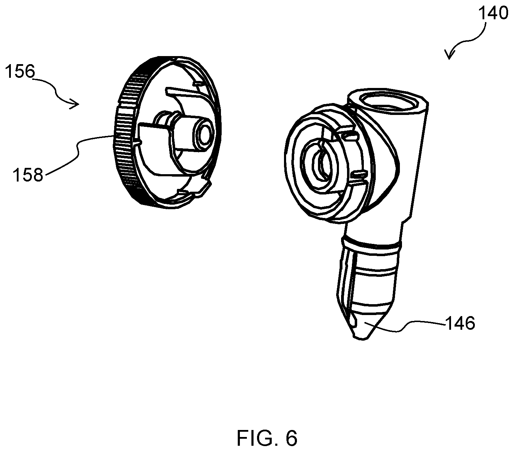

In some embodiments, such as shown in FIGs. 5 and 6, an adjustment mechanism 156 is provided for controlling an amount of air deliverable into the mixing chamber 102 via the air inlet 154. In such embodiments, the adjustment mechanism 156 may assist to control characteristics of froth or foam produced from the liquid 103 delivered into the mixing chamber 102.

The adjustment mechanism 156 can be implemented in any suitable manner. In some embodiments, such as shown in FIG. 6, at least part of the adjustment mechanism 156 is included in a steam wand assembly 140, for example a steam wand assembly 140 comprising, e.g. formed from, a silicone sleeve.

The adjustment mechanism 156 may include an actuator 158, such as an adjustment wheel, that is moveable to control a size of the air inlet 154. In this way, the adjustment mechanism 156 may provide control over the amount of air deliverable into the mixing chamber 102 via the air inlet 154.

In some embodiments, the adjustment mechanism 156 is controllable to close the air inlet 154 to block air ingress into the mixing chamber 102.

In such embodiments, the mixing device 100 may be configured to provide heated milk, e.g. to create café au lait, etc. In other words, closing the air inlet 154 may be employed to prepare recipes that require heated milk and no froth.

As mentioned above, embodiments of the present disclosure may enable transport of the liquid 103 with limited temperature increase of the liquid 103. As such, the liquid intake assembly 110 may transport relatively cold liquid 103, e.g. milk, into a cup. This may enable preparation of, for example, coffee recipes that incorporate both cold brewed coffee and cold milk.

It is noted that the housing 138, e.g. plastic housing 138, may include a T- or X-junction, with a) the outlet nozzle 150 producing the mixed product, e.g. frothed milk, b) the steam nozzle 146 taking in steam into the mixing chamber 102, c) a side inlet in the form of the port(s) 124 taking in the liquid 103, e.g. milk, by the Venturi effect, and d) an optional further side inlet in the form of the air inlet 154 for taking in air by the Venturi effect.

The housing 138, e.g. plastic housing 138, may be fully based on the geometry of a panarello.

The design may, for example, incorporate metal and plastic tip components 142, 144 present in the steam wand assembly 140, e.g. in the steam wand assembly 140 of a fully automatic coffee machine.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to".

Any reference signs in the claims should not be construed as limiting the scope.

## Claims

1. A kitchen mixing device (100) comprising:
a mixing chamber (102); and
a liquid intake assembly (110) comprising:
an insert member (112) for arranging in a container (114), which container is suitable for containing liquid (103); and
a sleeve member (118) for arranging in the container and cooperating with the insert member, the insert member being configured to fit inside the sleeve member with the sleeve member extending around the insert member, wherein at least one flow channel (120), arranged to receive the liquid from the container, is defined between the insert member and an interior surface (122) of the sleeve member, the sleeve member delimiting at least one port (124) for fluidly coupling the at least one flow channel to the mixing chamber.

2. The kitchen mixing device (100) according to claim 1, wherein the insert member (112) is at least partially releasable from inside the sleeve member (118).

3. The kitchen mixing device (100) according to claim 1 or claim 2, wherein fit of the insert member (112) inside the sleeve member (118) is adjustable to control flow through the at least one flow channel (120).

4. The kitchen mixing device (100) according to any one of claims 1 to 3, wherein the interior surface (122) delimits a widening cavity whose width is greater with increasing distance away from the port(s) (124); optionally wherein the insert member (112) comprises a tapering shape that narrows as the cavity's width decreases.

5. The kitchen mixing device (100) according to any one of claims 1 to 4, wherein at least one of the insert member (112) and the sleeve member (118) comprises a non-stick and/or sealing material for contacting the liquid; optionally wherein non-stick and/or sealing material comprises silicone.

6. The kitchen mixing device (100) according to any one of claims 1 to 5, wherein one or more grooves (125) for carrying the liquid is or are defined in an exterior surface of the insert member (112) and/or in the interior surface (122) of the sleeve member (118).

7. The kitchen mixing device (100) according to any one of claims 1 to 6, comprising an attachment system (130, 132) configured to secure the insert member (112) and the sleeve member (118) to each other, with the insert member being inserted into the sleeve member to define the at least one flow channel (120).

8. The kitchen mixing device (100) according to any one of claims 1 to 7, comprising a lid (134) for closing the container (114), the sleeve member (118) being mounted or mountable to the lid to enable the sleeve member to receive the insert member (112) and define the at least one flow channel (120) when the container is closed by the lid.

9. The kitchen mixing device (100) according to any one of claims 1 to 8, comprising a mixing chamber-sleeve member assembly (136) comprising a housing (138) delimiting the mixing chamber (102), the sleeve member (118) being mounted or mountable to the housing.

10. The kitchen mixing device (100) according to any one of claims 1 to 9, comprising the container (114) for holding the liquid (103); optionally wherein the kitchen mixing device comprises a container-insert member assembly (128) that includes the container and the insert member (112) mounted or mountable in the container.

11. The kitchen mixing device (100) according to any one of claims 1 to 10, comprising an air inlet (154) through which air is receivable into the mixing chamber (102); and optionally an adjustment mechanism (156) for controlling an amount of air deliverable into the mixing chamber via the air inlet.

12. The kitchen mixing device (100) according to any one of claims 1 to 11, comprising a fluid transport system for transporting the liquid from the container (114) into the mixing chamber (102) via the flow channel(s) (120) and the port(s) (124).

13. The kitchen mixing device (100) according to any one of claims 1 to 12, comprising a fluid inlet (104), a fluid outlet (106), and a flow restriction (108) arranged so that flow of fluid between the fluid inlet and the fluid outlet provides an under-pressure for drawing the liquid from the container (114) into the mixing chamber (102) via the flow channel(s) (120) and the port(s) (124).

14. The kitchen mixing device (100) according to any one of claims 1 to 13, comprising a steam supply for supplying a flow of steam to the mixing chamber (102).

15. A beverage machine comprising the kitchen mixing device (100) according to any one of claims 1 to 14; optionally wherein the beverage machine comprises a coffee brewing apparatus.
